# EUROPEAN PATENT APPLICATION

(11) **EP 1 445 051 A1**
(43) Date of publication of application: **11.08.2004**
(21) Application number: 04075394.9
(22) Date of filing: 06.02.2004
(51) Int. Cl.: B23B 31/107, B23B 31/00

(54) **Multidrive quick change chuck**

(30) Priority: 10.02.2003 US 364196
(71) Applicant: The Boeing Company, Seattle, Washington 98124-2207 (US)
(72) Inventor: Baldwin, Paul L., Kent, Washington 98042 (US); Johnson, Richard E., Kent, Washington 98042 (US)
(74) Representative: Land, Addick Adrianus Gosling

(57) **Abstract**

A quick-release multi-drive drill motor chuck for receiving a rotary tool is provided. The chuck body (24) has a first end, a second end, and an axis and a defined cylindrical bore from the first end toward the second end. The chuck body (24) defines a plurality of orifices (36) extending from the bore at a finite distance from the first end, the chuck body defining a keyway or relief (44) in the first end. A plurality of detent balls (22) are disposed in the plurality of orifices (36) such that one ball is placed inside of each orifice. A collar (26) having an axis is disposed concentrically around the chuck body in slip fit relationship, such that slipping the collar along the chuck body will alternately expose the orifices to either the inner wall or a recess (38), thereby positioning said recess (38) for receiving the detent balls. An adapter (40) having a key (42) fitting within the keyway (44) of the chuck for the transmission of torque is also disclosed.

## Description

### FIELD OF THE INVENTION

This invention relates generally to power tools and, more specifically, to drill motor power tools.

### BACKGROUND OF THE INVENTION

Many advantages are available with the use of a quick-change chuck for drill motor devices:
1) Alignment along the axis of the drill motor is assured;
2) The positive action of the drill chuck presents tactile feedback confirming the security of the bit; and
3) Operator fatigue is minimized.

Several successful designs exist using hardened ball bearings fitting into dimples on the bit to effect a detent. United States Patents have been granted to such designs: 4,184,692 to Benson et al.; 4,188,041 to Soderberg; 4,234,277 to Benson et al.; 4,273,344 to Benson et al.; 4,290,617 to Yoshida; 4,743,145 to Hendricks et al.; and 4,749,316 to Hendricks. Each of these patents is incorporated by this reference.

U.S. patent 4,184,692 to Benson et al. has enjoyed uniform acceptance in industrial and hobby applications. Aerospace manufacturers have a vast number of bits and chucks in their tool cribs. While certainly a very useful bit and chuck combination, the bits have proven to be expensive to manufacture. As the dimples in the bit serve both as a detent and the torque imparting surface of the generally cylindrical bit, the bit must be machined and ground from high-quality tooling steel.

Separating the surfaces along the generally cylindrical bit that serve the purposes of the detent mechanism and the torque-imparting surface would allow design specialization of each surface. For instance, making the torque-imparting surface mechanism larger would allow it to be made of a softer material.

To make the quick change chuck even more financially attractive, that chuck should capably drive "Benson"-style bits that remain in manufacturer's tool cribs as well as bits of any new design. Additionally, an adapter placed on the end of a rotary tool such as a drill bit will configure a conventional "straight shank" drill bit for use in the chuck.

Thus, there exists an unmet need in the art for a multi-drive quick-change chuck that will accommodate "Benson"-style bits as well as quick change bits that are less expensive to fabricate.

### SUMMARY OF THE INVENTION

The quick-release multi-drive drill motor chuck will hold, retain and drive either bits of the prior art or "Benson"-style or bits using the provided adapter. When chucking bits from the provided adapter, the detent and driving functions of the chuck are handled by separate surfaces of the adapter. The detent balls used in the prior designs, handle the detent function. The driving surface of the detente balls are too small for driving without requiring the use of material having a high Rockwell number. The provided adapter has a key or "dog" detent that fits into a keyway or boss in the chuck. The key provides a much greater surface area for imparting and distributing the torque to the bit.

A quick-release multi-drive drill motor chuck for receiving a rotary tool is provided. The chuck body has a first end, a second end, and an axis and a defined cylindrical bore from the first end toward the second end. The chuck body defines a plurality of orifices extending from the bore at a finite distance from the first end, the chuck body defining a keyway or relief embodiment in the first end. A plurality of detent balls are disposed in the plurality of orifices such that one ball is placed inside of each orifice. A collar having an axis is disposed concentrically around the chuck body in axial slip fit relationship, such that slipping the collar axially along the chuck body will alternately expose the orifices to either the inner wall or a recess, thereby positioning said recess for receiving the detent balls.

### BRIEF DESCRIPTION OF THE DRAWINGS

The preferred and alternative embodiments of the present invention are described in detail below with reference to the following drawings.
FIGURE 1 is a drawing of the prior art adapter;
FIGURE 2 is a drawing of the prior art chuck body;
FIGURE 3 is a drawing of a first preferred embodiment of a chuck body;
FIGURE 4 is a drawing of a first preferred embodiment of the adapter body along with a tool shank detail;

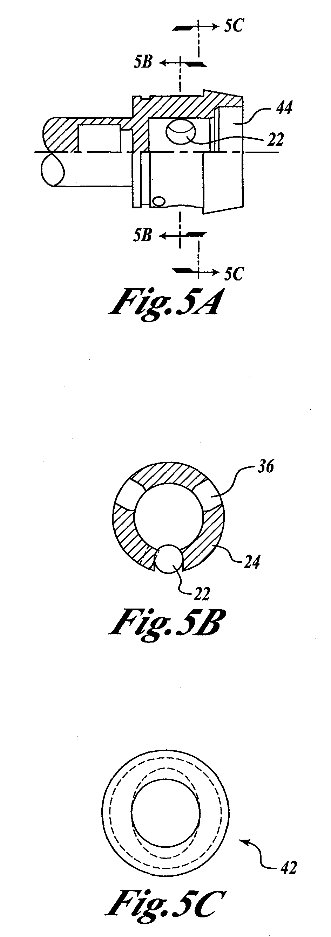

FIGURE 5 is a drawing of a second preferred embodiment of a chuck body;

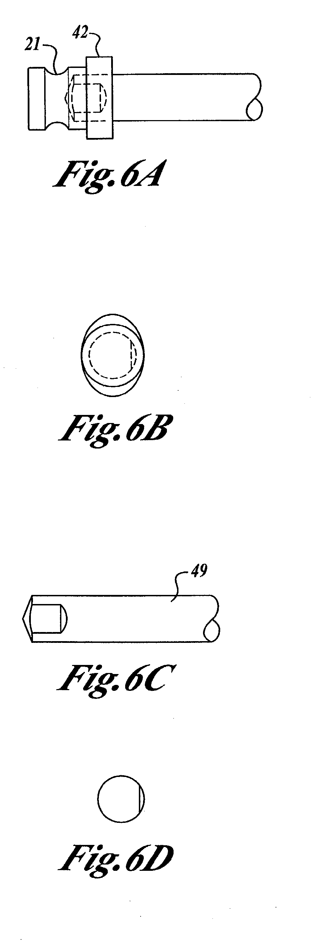

FIGURE 6 is a drawing of a second preferred embodiment of an adapter body along with a tool shank detail;

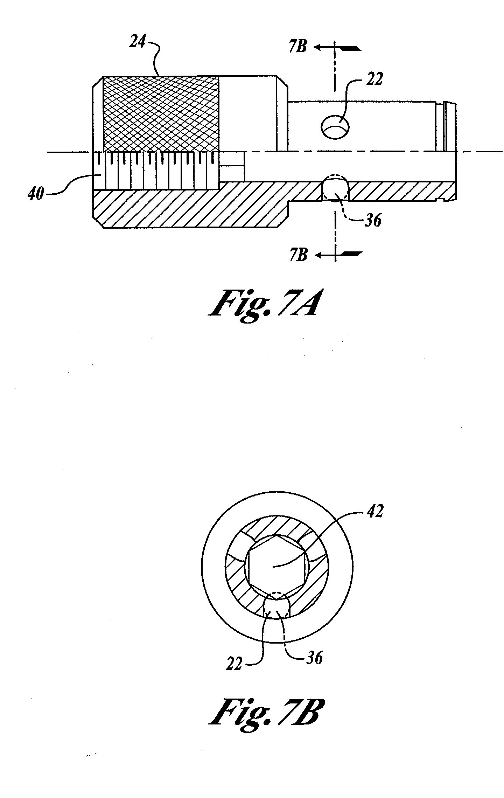

FIGURE 7 is a drawing of the third preferred embodiment of a chuck body; and

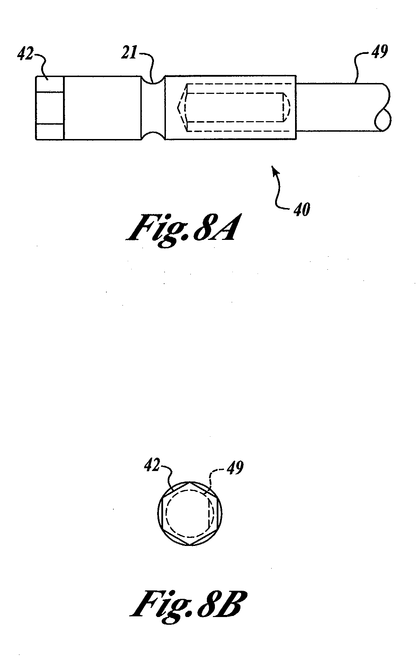

FIGURE 8 is a drawing of the third preferred embodiment of an adapter body along with the tool shank detail.

### DETAILED DESCRIPTION OF THE INVENTION

By way of overview, a quick release multi-drive drill motor chuck for receiving a rotary tool is provided. The chuck body has a first end, a second end, an axis and a defined cylindrical bore from the first end toward the second end. The chuck body has a defined plurality of orifices extending from the bore at a finite distance from the first end, the chuck body defining a keyway or boss at the first end. A plurality of detent balls are distributed in the orifices such that one ball is placed inside of each orifice. A collar having an axis is concentrically around the chuck body in axial slip fit relationship, such that slipping the collar axially along the chuck body will alternately expose the orifices to either the inner wall or a recess, thereby positioning said recess for receiving the detent balls.

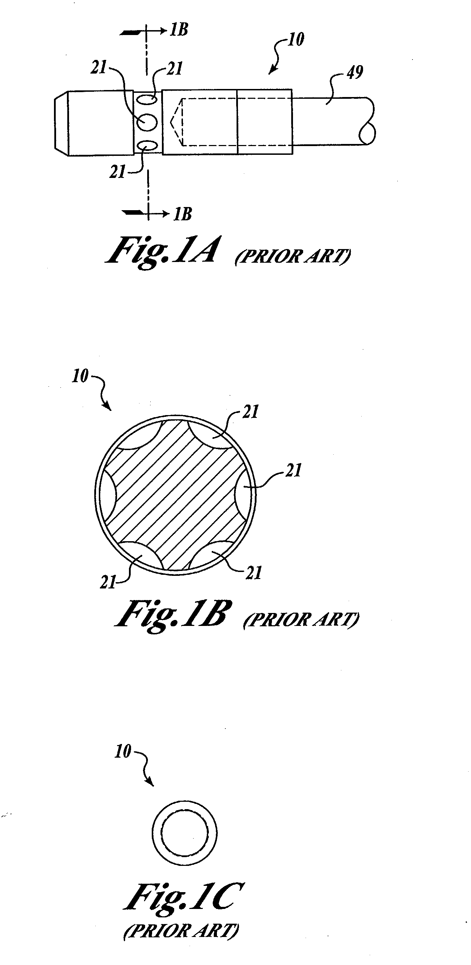

FIGURE 1 shows the prior art adapter 10 and its principle dimensions. The adapter 10 is a sleeve with a radius e; around the circumference of the adapter at a distance *a* or *b* to the center of the dimple 21 by a series of six dimples 21. In the prior art embodiment these dimples both hold the adapter 21 in the chuck but also impart torque to the bit 49 that the adapter 10 holds. As shown in section B, each of these six dimples 21 provide a recess to receive a detaining ball bearing 22. In order to be equidistant around the circumference of the adapter 10, the dimples are offset by 60 degrees.

The adapter 10 encases and holds a rotary tool 49 such as a drill bit or screwdriver bit. The drill bit or screwdriver bit 49 has a diameter *m*. The tool 49 rests within a bore in the adapter. The bore has a diameter of *f*. For the purposes of this application, *f* is the equivalent of *m*. Rather than derive the engineering tolerances that are necessary for interior diameters of casings to match the exterior diameters of an encased tool, the dimensions shall be presumed to be the same. Any machinist skilled in the art will realize that while functionally equivalent, certain tolerances need be introduced in order to make the parts fit one onto the other in a manner that eliminates slippage.

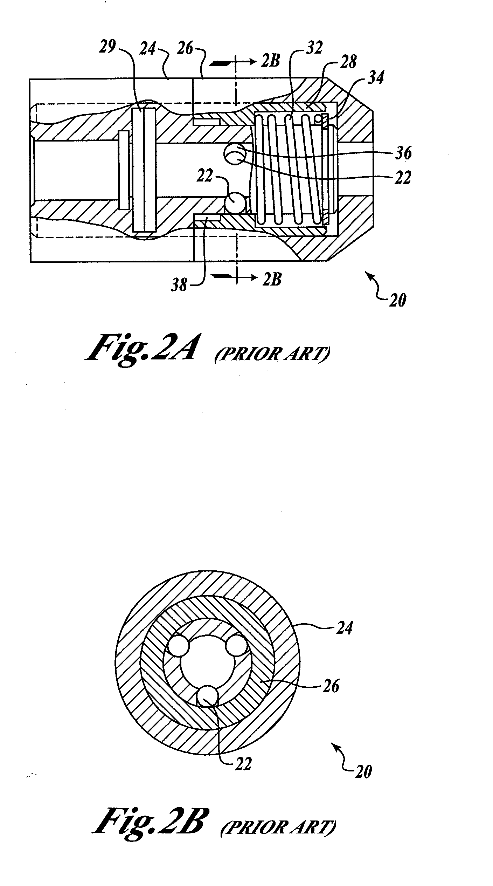

FIGURE 2 shows the prior art chuck 24 that receives the prior art adapter 10 (FIGURE 1). The chuck body 24 defines a recess with a diameter *g*. The purpose of the recess is to affix the chuck body 24 onto a drill motor spindle (not shown). The working portion of the chuck 20 includes a captive spring 28 held captive by a snap ring 34 against the shoulder of a sliding collar 26. When the sliding collar 26 is pulled axially against the captive spring 28, it slides axially to expose said cavities 36 to a recess 38 allowing the hardened ball bearings 22 to travel radially outward releasing the adapter 10 (FIGURE 1).

Reviewing the FIGURES 1 and 2, it should be immediately appreciated by those skilled in the art that the hardened ball bearing 22 used to engage in the dimples 21 not only holds the adapter 10 within the chuck 20, but also imparts torque to the bit as the drill motor spindle (not shown) turns. No other surface exists on the adapter 10 to receive torque from the spinning chuck 20. Because of the small shared surface between the dimple 21 in the ball bearing 22, the adapter must be formed of metal with a suitably high Rockwell number.

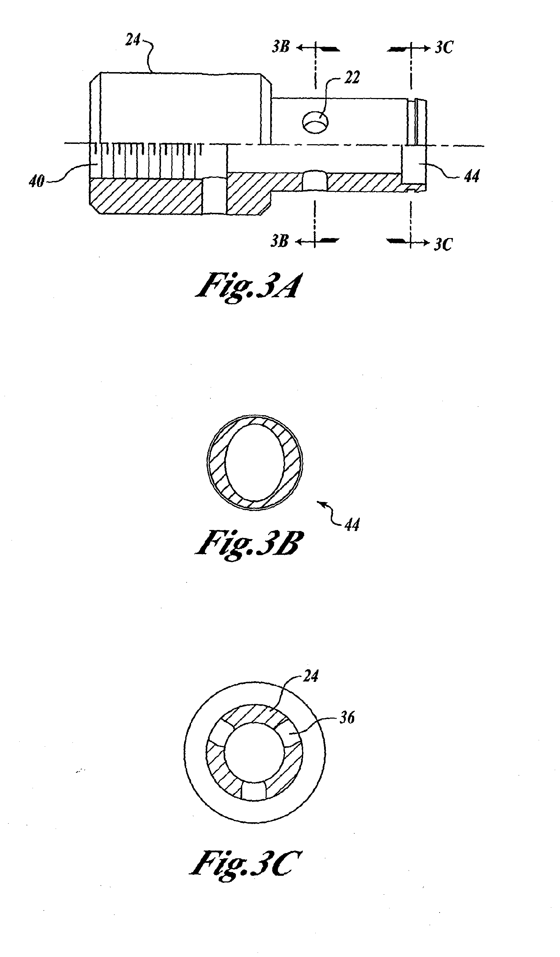

FIGURE 3 shows the inventive chuck body 24. The principal difference between the inventive chuck body 24 and the prior art chuck body 24 (FIGURE 2) is the presence of a keyway or boss 44 for receiving a key or dog cast onto the adapter 10. The first preferred embodiment of the invention is portrayed in FIGURE 3. Like the prior art chuck body 24 (FIGURE 2), the chuck body 24 carries ball bearings 22 in cavities 36 (See section B-B).

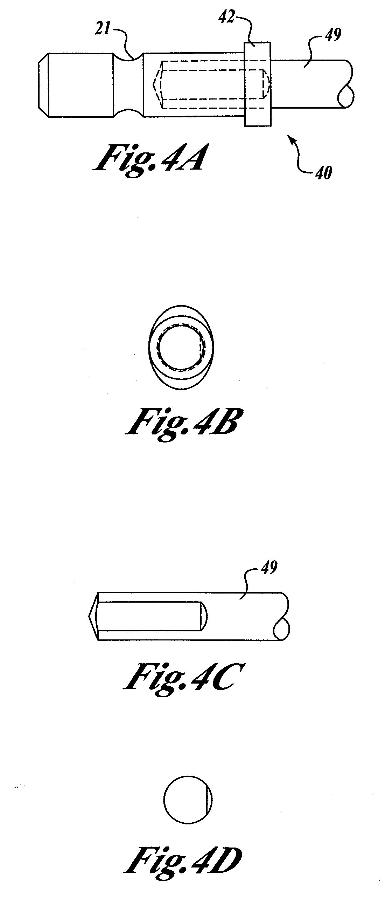

As shown, the cavity 40, with diameter *g*, is threaded to receive a threaded spindle on the drill motor (not shown). The keyway boss/recess 44 has a length h; the cross-section of the keyway boss 44 is shown as section C-C. In this presently preferred embodiment, the keyway boss 44 is elliptical with length *j*, along the major axis and length *i* along the minor axis. It is important to note that the major axis length exceeds the diameter e in this embodiment. The keyway recess 44 will impart the torque to the adapter 40 (FIGURE 4). Those skilled in the art will readily appreciate that the chuck body 24 remains suitable to drive the prior art adapter 10 (FIGURE 1).

FIGURE 4 shows the adapter 40. Having an overall length of k, the adapter is notably distinct from the prior art adapter (FIGURE 1) due to the presence of the key 42 with length *h*. As is no longer necessary for the dimple 21 to receive torque from that chuck 20, a circumferential trough 21 duly satisfies the requirements for retaining the adapter in the chuck 24 (FIGURE 3). Like the keyway boss/recess 44 (FIGURE 3), the key 42 in this embodiment is elliptical in its silhouette with a major axis of length *j* and a minor axis of length i. The key 42 should engage the keyway boss/recess 44 (FIGURE 3), allowing the chuck to convey torque to the bit 49. The bit 49 having diameter *m* is affixed in the adapter by means of casting the adapter 40 onto the bit. In the presently preferred embodiment, the shank of the bit 49 is faceted with a face of length o, and width *p*.

The presently preferred embodiment of the invention has been illustrated and described, as noted above; many changes can be made without departing from the spirit and scope of the invention. Accordingly, the scope of the invention is not limited by the disclosure of the preferred embodiment. Instead, the invention should be determined entirely by reference to the claims that follow.

## Claims

1. A quick release drill motor chuck for receiving a rotary tool, the chuck comprising:
a chuck body having a first end, a second end, and an axis and defining a substantially cylindrical bore from the first end toward the second end, the chuck body defining a plurality of orifices extending from the bore at a finite distance from the first end, the chuck body defining an keyway at the first end;
a plurality of detent balls disposed in the plurality of orifices such that one ball is placed inside of each orifice; and
a collar having an axis, the collar defining a generally cylindrical bore, the bore having a generally cylindrical inner wall, the inner wall defining a plurality of recesses at the orifices, the collar being disposed coaxially around the chuck body in slip fit relationship, such that slipping the collar along the chuck body will alternately expose the orifices to either the inner wall or a recess, thereby positioning said recess for receiving the detent balls.

2. The chuck according to Claim 1 comprising:
the collar being disposed coaxially around the chuck body in rotational slip fit relationship, such that slipping the collar rotationally around the chuck body will alternately expose the orifices to either the inner wall or a recess, thereby positioning said recess for receiving the detent balls.

3. The chuck of Claim 1, wherein the chuck is disposed coaxially around the chuck body in axial slip fit relationship, such that slipping the collar axially around the chuck body will alternately expose the orifices to either the inner wall or a recess, thereby positioning said recess for receiving the detent balls.

4. A quick release drill motor chuck for receiving a rotary tool, the chuck comprising:
a chuck body having a first end, a second end, and an axis and defining a substantially cylindrical bore from the first end toward the second end terminating in a seat, the chuck body defining a plurality of orifices extending from the bore at a finite distance from the first end, the seat defining a keyway;
a plurality of detent balls disposed in the plurality of orifices such that one ball is placed inside of each orifice; and
a collar having an axis, the collar defining a generally cylindrical bore, the bore having a generally cylindrical inner wall, the inner wall defining a plurality of recesses at the orifices, the collar being disposed coaxially around the chuck body in axial slip fit relationship, such that slipping the collar axially along the chuck body will alternately expose the orifices to either the inner wall or a recess, thereby positioning said recess for receiving the detent balls.

5. A quick release drill motor chuck for receiving a rotary tool, the chuck comprising:
a chuck body having a first end, a second end, and an axis and defining a substantially cylindrical bore from the first end toward the second end terminating in a seat, the chuck body defining a plurality of orifices extending from the bore at a finite distance from the first end, the seat defining a keyway;
a plurality of detent balls disposed in the plurality of orifices such that one ball is placed inside of each orifice; and
a collar having an axis, the collar defining a generally cylindrical bore, the bore having a generally cylindrical inner wall, the inner wall defining a plurality of recesses at the orifices, the collar being disposed coaxially around the chuck body in rotational slip fit relationship, such that slipping the collar rotationally around the chuck body will alternately expose the orifices to either the inner wall or a recess, thereby positioning said recess for receiving the detent balls.

6. The chuck according to any of Claims 1-5, wherein the keyway has a length along the axis of the chuck body and a silhouette in a plane perpendicular to the axis of the chuck body.

7. The chuck according to any of Claims 1-6, wherein the silhouette is elliptical.

8. The chuck of Claim 6, wherein the silhouette is hexagonal.

9. An adapter for a rotary tool, the adapter having a generally cylindrical outer wall, the outer wall having a radius, the adapter having a first end, a second end, and an axis and defining a substantially cylindrical bore from the first end toward the second end terminating in a seat, the seat defining a keyway, the generally cylindrical shape defining one or more recesses extending from the cylindrical outer wall at a finite distance from the first end, the outer wall forming a key at the first end.

10. An adapter for a rotary tool, the adapter having a generally cylindrical outer wall, the outer wall having a radius, the adapter having a first end, a second end, and an axis and defining a substantially cylindrical bore from the first end toward the second end terminating in a seat, the seat defining a keyway, the generally cylindrical shape defining one or more recesses extending from the cylindrical outer wall at a finite distance from the first end, the outer wall forming a key at the second end.

11. The adapter of Claim 9 or 10, wherein the key has a length along the axis of the adapter and a silhouette in a plane perpendicular to the axis of the adapter.

12. The adapter of Claim 9, 10 or 11 wherein the silhouette has a longest dimension across the silhouette and the longest dimension across the silhouette is equal to or less than the outer wall radius.

13. The adapter of Claim 12, wherein the silhouette is elliptical.

14. The adapter of Claim 12, wherein the silhouette is hexagonal.
